# EUROPEAN PATENT APPLICATION

(11) **EP 4 480 591 A2**
(43) Date of publication of application: **25.12.2024**
(21) Application number: 24211732.3
(22) Date of filing: 19.10.2022
(51) Int. Cl.: B05C 11/10

(54) **GROUND MARKING BEAD FLOW SENSOR**

(30) Priority: 20.10.2021 US 202163257936 P
(62) Divisional of application: 22202490.3
(71) Applicant: Graco Minnesota Inc., Minneapolis, MN 55413-1829 (US)
(72) Inventor: Rohling, Daniel D., Corcoran, 55374 (US); Schroeder, James C., Ramsey, 55303 (US)
(74) Representative: Meissner Bolte Partnerschaft mbB

(57) **Abstract**

A bead flow sensor module includes a housing, a beam, and a sensor. The beam extends into a flow channel of the housing through which a flow of beads and compressed air flows. The sensor outputs a signal indicative of bead impacts on the beam. A system incorporating the bead flow sensor module includes a compressed air source, a bead hopper, and a bead dispenser. The compressed air source delivers a flow of compressed air to the bead hopper. A flow of beads carried by the compressed air discharges from the bead hopper along a flow pathway connecting the bead hopper to the bead dispenser. The bead flow sensor module positioned along the flow pathway outputs the signal from which a bead flow volume through the bead dispenser is determined.

## Description

### CROSS-REFERENCE TO RELATED APPLICATION(S)

This application claims the benefit of U.S. Provisional Application No. 63/257,936 filed October 20, 2021, and entitled "GROUND MARKING BEAD FLOW SENSOR," the disclosure of which is hereby incorporated by reference in its entirety.

### BACKGROUND

The present disclosure relates generally to vehicle-mounted line striping systems. More specifically, the present disclosure relates to a monitoring system for bead dispensing.

Vehicle-mounted line striping systems are used for painting stripes on roadways, runways, parking lots, and other ground surfaces. Line striping systems typically comprise pushed and/or gas or electric-propelled platforms that dispense materials used to mark ground surfaces. The systems typically include a gas or electric motor for driving a pump. The pump is fed a flowable material, such as paint, from a container and pumps the fluid to spray nozzles mounted to discharge the fluid toward the ground surface. While paint is used herein as an exemplar, it is understood that paint is merely one example and that other solutions (e.g., water, oil, solvents, beads, flowable solids, pellets, etc.) can be applied in addition to or instead of paint. In some cases, ground markings can be thermally applied instead of sprayed as a paint.

Striping systems are typically mounted on a vehicle. For example, the striping systems can be mounted on the bed of a truck. Such a striping system has the advantage of being used in a common truck, such as a pickup truck, without the need of a specialized vehicle. The striping systems can be palletized such that they can be loaded, lifted, placed, and unloaded by a conventional pallet jack or forklift in the same manner as a conventional pallet. When mounted on a vehicle, one or more dispense outlets are mounted on an extension that extends away from the vehicle to dispense the striping material as the vehicle drives. In most cases, the extension is on the lateral side of the vehicle to apply one or more stripes to the side of the vehicle as the vehicle drives forward. Such a system can apply a large volume of striping material to the ground due to the carrying capacity of the vehicle, both in terms of material to be applied and the pumping, mixing, and dispensing equipment, and due to the distance that such a vehicle can efficiently cover, particularly along a long stretch of roadway.

Beads may be applied to line stripes to increase their reflectivity. Beads are three-dimensional and can be highly reflective along many orientations. Wet paint or other coating applied to the ground surface can have beads dropped or shot on the paint or other coating to embed or otherwise adhere the beads to the paint or other coating. The paint or other coating will rapidly dry and the beads can become permanently part the line stripe, increasing the visibility, and in particular the reflectivity, of the stripe.

### SUMMARY

In one illustrative example, this disclosure presents a bead flow sensor module that includes a housing, a beam, and a sensor. The beam extends into a flow channel of the housing. The sensor outputs a signal indicative of bead impact on the beam.

In another illustrative example, this disclosure presents a system that includes a compressed air source, a bead hopper, a bead dispenser, a flow pathway between the bead hopper and the bead dispenser, and a bead flow sensor module. The compressed air source supplies a flow of compressed air to the bead hopper. A flow of beads carried within the flow of compressed air exits the bead hopper through the flow pathway to the bead dispenser. The bead flow sensor module is positioned along the flow pathway and comprises a housing, a beam, and a sensor. The beam extends into a flow channel of the housing. The sensor outputs a signal indicative of bead impact on the beam.

### BRIEF DESCRIPTION OF THE DRAWINGS

FIG. 1 is an isometric view of a striping system that includes a bead dispensing system.
FIG. 2 is a schematic view of an exemplary bead dispensing system of the striping system that includes a bead flow sensor module.
FIG. 3 shows a cross-sectional view of an exemplary bead flow sensor module taken along a centerline of a flow channel.
FIG. 4 shows an end view depicting the exemplary bead flow sensor module of FIG. 3 viewed from an inlet of the flow channel.
FIG. 5 shows an isolated view of an exemplary beam of the bead flow sensor module of FIG. 3.

### DETAILED DESCRIPTION

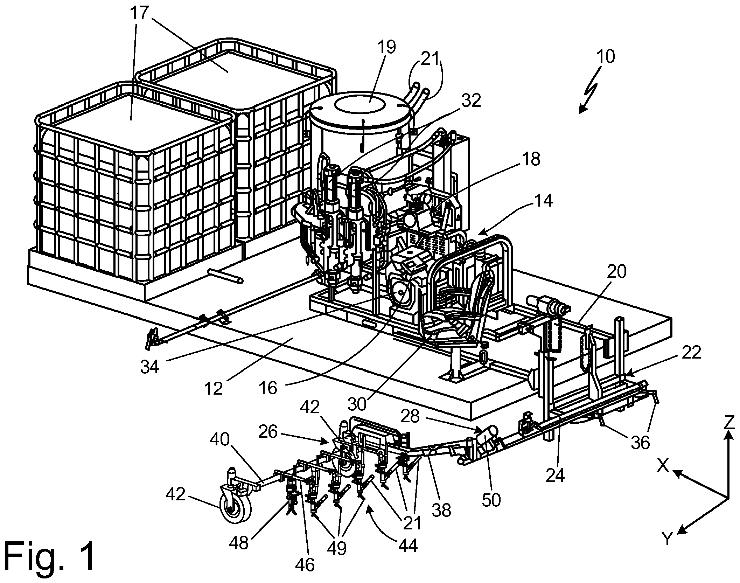

FIG. 1 is an isometric view of striping system 10. Striping system 10 includes vehicle surface 12, pumping module 14, user interface 16, liquid reservoirs 17, compressor 18, bead hopper 19, support frame 20, hoses 21, beam mount 22, beam 24, dispense arm 26, carriage 28, and seat 30. Pumping module 14 includes pumps 32 and motor 34. Beam mount 22 includes beam clamps 36. Dispense arm 26 includes boom 38, lateral arm 40, wheels 42, and dispensing modules 44. Dispensing modules 44 include gun arms 46, spray outlets 48, and bead dispensers 49. Carriage 28 includes carriage motor 50.

Striping system 10 is a system for applying stripes of a marking material, such as paint, water, oil, solvents, beads, reflective glass beads, flowable solids, pellets, etc., to a ground surface, such as a roadway, runway, parking lot, or other desired surface. While the term "stripes" is used herein as an example, it will be understood that the scope of this disclosure includes dispensing fluid and/or material on any surface in any pattern, and is not limited to the marking of stripes.

Vehicle surface 12 is a surface of a self-propelled vehicle that supports other components of striping system 10. For example, vehicle surface 12 can be the bed of a truck, such as a pickup truck, a pallet or other structure mounted to a truck, or another vehicle surface. Liquid reservoirs 17 are disposed on vehicle surface 12 and are configured to store the marking material prior to application to the ground surface. The marking material can be any desired material suitable for creating the stripes, such as paint, flowable solids such as beads, plural component materials, or any other suitable material. In some examples, system 10 can include bead hopper 19 to store beads apart from a liquid component (e.g., paint) of the marking material contained in liquid reservoirs 17. A compressor 18 pressurizes bead hopper 19 and generates an airflow to carry the beads out of bead hopper 19 via hoses 21 to bead dispensers 49.

Support frame 20 is disposed on vehicle surface 12 and supports various components of striping system 10. Support frame 20 is configured to mount to vehicle surface 12 and can either rest on vehicle surface 12 or be connected to vehicle surface 12. In some examples, support frame 20 is removably connected to vehicle surface 12, such as by fasteners, such as bolts, or straps. In other examples, support frame 20 is permanently connected to vehicle surface 12, such as by welding.

Pumping module 14 is supported by support frame 20 and configured to drive the marking material from liquid reservoirs 17 to dispense arm 26. Pumps 32 are supported by support frame 20 and are fluidly connected to liquid reservoirs 17 by one or more of a pipe, a conduit, and a hose. Motor 34 is also supported by support frame 20 and is configured to power pumps 32. In some examples, motor 34 powers a variable displacement pump that drives pumps 32. In other examples, motor 34 can also power an air compressor 18 to power pumps 32, where pumps 32 are pneumatic, to draw a liquid component of the marking material from reservoir 17 and discharge the liquid component of the marker material through spray outlets 48. In some examples, air compressor 18 also pressurizes bead hopper 19 to drive reflective glass beads to and out of glass bead dispensers 49. It is understood, however, that pumps 32 can be driven in any desired manner, such as mechanically, electrically, or hydraulically, and motor 34 can be of any suitable configuration for powering pumps 32. While pumping module 14 is shown as including two pumps 32, it is understood that pumping module 14 can include fewer or greater number of pumps 32. Moreover, pumping module 14 can include any desired configuration of pump 32 suitable for driving the marking material from liquid reservoirs 17 to dispense module 44, such as piston pumps, diaphragm pumps, georotor pumps, lobe pumps, rotary vane pumps, peristaltic pumps, and plunger pumps, among other options.

Seat 30 is supported by support frame 20. A user is typically seated in seat 30 during operation. The position of seat 30 allows the user to monitor the placement of the stripe by striping system 10 and adjust the location of dispense arm 26 as needed. User interface 16 extends from seat 30 and provides controls to the user to allow the user to actuate carriage 28 and adjust the position of dispense arm 26 along the Y-axis. User interface 16 is operatively connected to carriage motor 50 to control operation of carriage motor 50.

Beam mount 22 extends from support frame 20. Beam mount 22 is directly or indirectly connected to support frame 20, such as by bolts or intermediate structural plates and/or tubes. Beam 24 is mounted on beam mount 22 and is secured to beam mount 22 by beam clamps 36. Beam clamps 36 prevent movement of beam 24 relative to beam mount 22 and support frame 20. Beam 24 is cantilevered from beam mount 22 with a free end of beam 24 spaced from vehicle surface 12. Beam 24 extends laterally along the Y-axis from vehicle surface 12 so that the free end of beam 24 is positioned to the left side of vehicle surface 12 and the remainder of the vehicle.

Carriage 28 rides on beam 24. Carriage 28 is movable along the entire length of beam 24. Specifically, carriage 28 can move laterally along the Y-axis. Carriage motor 50 is configured to drive carriage 28 laterally along beam 24 on the Y-axis.

Dispense arm 26 is connected to beam 24 by carriage 28. Boom 38 is attached to and extends from carriage 28. Lateral arm 40 extends laterally from boom 38 along the Y-axis. Wheels 42 are disposed at the ends of boom 38 and are configured to support dispense arm 26 relative to the ground. Wheels 42 support the weight of dispense arm 26 on the ground surface. Wheels 42 typically bracket the ground surface being marked by striping system 10. While dispense arm 26 is shown as including two wheels 42, it is understood that dispense arm 26 can include any desired number of wheels 42 to support dispense arm 26 on the ground surface, such as one, three, four, or any other desired number of wheels 42. Lateral translation of carriage 28 along beam 24 likewise causes lateral movement of dispense arm 26.

Gun arms 46 extend from boom 38 and dispensing modules 44 are disposed on gun arms 46. Dispensing modules 44 are fluidly connected to pumps 32 to receive marking material from pumps 32 and apply the marking material to the ground surface. Gun arms 46 are disposed generally orthogonal to lateral arm 40. While dispense arm 26 is shown as including five gun arms 46, it is understood that dispense arm 26 can include as many or as few gun arms 46 as desired, such as one, two, three, or any desired number. Spray outlets 48 and bead dispensers 49 are typically positioned above the surface being marked, such as by one or more inches (i.e., by 2.54 or more centimeters). Spray outlets 48 and bead dispensers 49 eject the marking material, in separate liquid and bead components, onto the ground surface. Specifically, for each stripe, the spray outlet 48 is positioned in front of each bead dispenser 49 such that the spray outlet 48 passes over a surface and sprays the surface with paint or other liquid coating and then the bead dispenser 49 passes over the freshly sprayed liquid coating and drops, blows, or otherwise dispenses the beads onto the liquid coating to adhere the beads to the stripe. Spray outlets 48 and bead dispensers 49 are moved along the surface being marked by forward motion of the vehicle, which motion is translated to spray outlets 48 and bead dispensers 49 by support frame 20, beam mount 22, beam 24, carriage 28, and dispense arm 26. In some examples, spray outlets 48 and bead dispensers 49 are positioned relative to one another so as to eliminate any gaps between the stripes generated by spray outlets 48 and bead dispensers 49. Two variations of dispense modules 44 are shown, spray nozzles 48 and bead dispensers 49, but it is understood that dispense arm 26 can include as few or as many varieties of spray outlets 48 and bead dispensers 49 as desired. Moreover, dispense arm 26 can include additional variations of spray outlets 48 and bead dispensers 49 in addition to the spray nozzles and bead dispensers shown.

During operation, the vehicle that vehicle surface 12 is a part of is driven across the ground surface in the longitudinal direction, along the X-axis. A user separate from the driver is seated in seat 30 and controls the position of dispense arm 26 along the Y-axis via user interface 16. As such, the user can monitor the application of the stripes and the lateral position of dispense arm 26 independent from steering of the vehicle. Pumps 32 draw the marking material from liquid reservoirs 17 and drive the marking material to dispensing modules 44. Hopper 19 is pressurized by compressor 18 to drive beads downstream from hopper 19 to bead dispensers 49. Spray outlets 48 and bead dispensers 49 eject the marking material, in separate liquid and bead components, onto the ground surface.

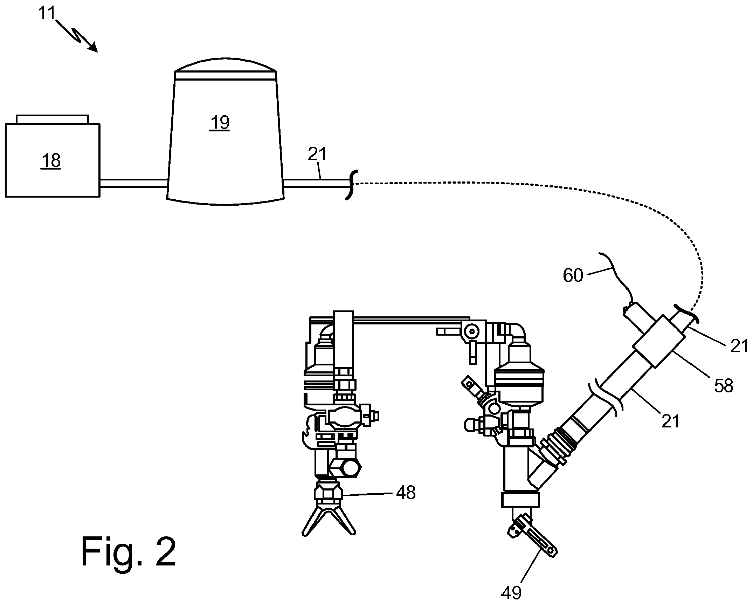

FIG. 2 shows a schematic view of the bead dispensing system 11 of the striping system 10. The bead dispensing system 11 includes a compressor 18 or other source of compressed air, such as a tank of compressed air. The compressor 18 generates a flow of compressed air. The flow of compressed air is routed, such as by hose, pipe, or conduit, to a bead hopper 19. The bead hopper 19 includes an internal chamber into which beads can be placed. The quantity of beads can number in the hundreds of thousands or millions within a bead hopper 19. The bead hopper 19 is sealed such that the inflow of compressed air circulates within the bead hopper to pressurize the area around the beads and flows out of the bead hopper 19 via hose 21, carrying the beads. Multiple hoses 21 may flow out of the bead hopper 19 or a manifold may attach to multiple hoses 21. One or more hoses 21 can connect with a lower portion of bead hopper 19, or other region of bead hopper 19 where beads collect. The beads are small and light enough that they are entrained in the flow of compressed air to flow through the interior of the hose with the airflow. It is noted that the flow can be dry such that the only fluid is compressed air flowing and the beads themselves. Hose 21 connects with the bead dispenser 49 which can spread the beads out laterally to fall on the freshly sprayed line from the spray outlet 48.

A position of sensor module 58 can be anywhere along the bead flow path between an outlet of bead hopper 19 and an outlet of bead dispenser 49. In some embodiments, sensor module 58 can be located anywhere along hose 21 between an outlet of the bead hopper 19 and an inlet of bead dispenser 49. In this embodiment, the sensor module 58 is located close to the bead dispenser 49 and relatively far away from the bead hopper 19, however the sensor module 58 can be placed anywhere along the flow path of beads. For instance, sensor module 58 can be adjacent to bead dispenser 49 as shown in FIG. 2. In this example, sensor module 58 connects to bead dispenser by a short length of hose 21, for example, by a length less than one meter. In other examples, the short length of hose 21 is less than half a meter, or less than one fourth of a meter. In still other examples, the short length of hose 21 between sensor module 58 and bead dispenser 49 can be omitted, connecting sensor module 58 directly to a fitting operatively associated with bead dispenser 49, or integrated into bead dispenser 49. In other examples, the sensor module 58 can be directly attached to an outlet of the bead hopper 19. While in other examples, the sensor module 58 can be intermediate of the bead hopper 19 and the bead dispenser 49. Bending, flexing, expansion, and/or contracting of hose 21 can introduce differences between the bead flow sensed by sensor module 58 and the bead flow discharged from bead dispenser 49. Placing sensor module 58 closer to bead dispenser 49 and relatively far away from hopper 19 improves accuracy of bead flow volume measurements by reducing or minimizing a length of hose 21 between sensor module 58 and bead dispenser 49.

A data line 60 extends from the sensor module 58 and is configured to provide a signal to control circuitry, the signal indicating a measure of bead flow volume. The data line 60 is shown as a wire in this embodiment, but the data line 60 could be a wireless signal communication between the sensor module 58 and the control circuitry. The user interface 16 can output a value representing the volume of the flow based on the signal communicated along the data line 60 from the sensor module 58. In typical use, one sensor module 58 will be provided for each hose 21. Each bead dispenser 49 is supplied by a respective hose 21. Therefore, there may be one sensor module 58 for each bead dispenser 49. For example, a plurality of sensor modules 58 can be provided for a plurality of bead dispensers 49, respectively. It is understood, however, that each sensor module 58 can be associated with one or more bead dispensers 49.

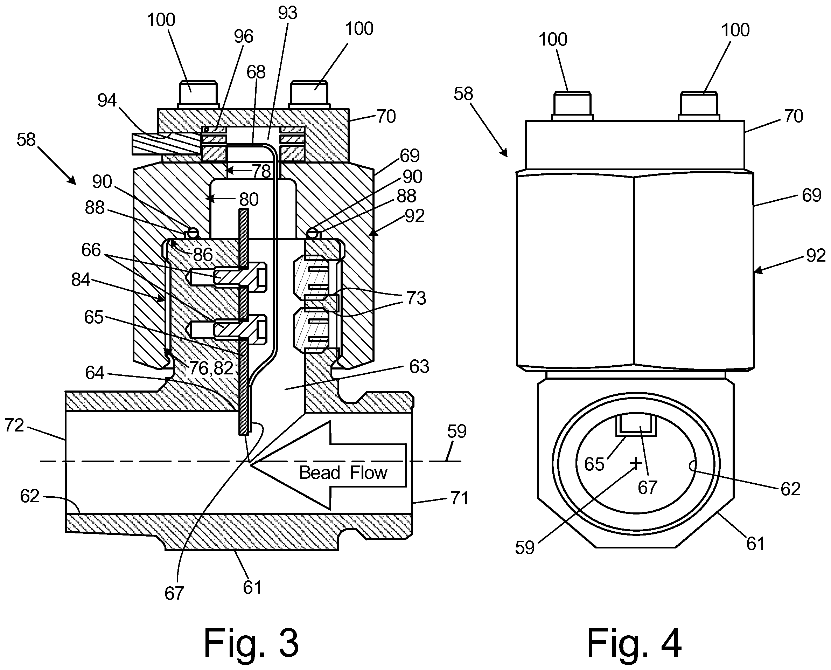

FIG. 3 shows a cross-sectional view of the sensor module 58. FIG. 4 shows an axial end view of sensor module 58 along centerline axis 59. The sensor module 58 measures the volume of beads traveling with a flow of compressed air, and outputs a signal indicative of the volume of beads traveling with the flow of compressed air.

The sensor module 58 includes a housing 61. The housing 61 includes a flow channel 62. The flow channel 62 can be axially aligned with the flow of compressed air and beads along centerline axis 59. Flow channel 62 is pressurized by compressor 18 along with bead hopper 19, hose 21, and bead dispenser 49. Flow channel 62 is not an open channel but is instead a closed, pressurized channel that conveys beads for dispensing by bead dispenser 49. In some examples, flow channel 62 is a cylindrical passage with a constant cross-section that extends through housing 62 from inlet 71 to outlet 72. In other examples, flow channel 62 can have a different cross-sectional shape, such as rectangular or polygonal, and may have include regions that have decreasing, increasing, or both decreasing and increasing cross-sectional area. Hoses or other components along the path the flow of beads can connect with an inlet 71 of the housing 61 and an outlet 72 of the housing 61. The direction of bead flow through the flow channel 62 from inlet 72 to outlet 72 along centerline axis 59 is indicated in FIG. 3.

Branching from the flow channel 62 is a side channel 63. Side channel 63 can be orientated orthogonal to the flow channel 62, however other orientations are possible. The flow channel 62 together with the side channel 63 can form a T shape. In other examples, side channel 63 intersects flow channel 62 at an oblique angle such that housing 61 forms a Y shape. Side channel 63 can be a dead end in which air and beads do not flow through. Dead-ended examples of side channel 63 may fill with beads during operation such that beads accumulate around and provide support to wire 68, portions of beam 65 and, in some cases, portions of sensor 67. The physical dimensions of side channel 63 (i.e., cross-sectional shape, area, and volume) are selected to permit beam 65 to deflect from impacting beads. Defining part of the side channel 63 is a ledge 64. In this embodiment, the ledge 64 is the downstream side of the side channel 63 relative to bead flow through flow channel 62, however the ledge 64 can be the upstream side of the side channel 63 or other surface. The ledge 64 can define the transition between side channel 63 and flow channel 62. In some examples, the transition between flow channel 62 and side channel 63 can be an intersection between one or more surfaces of flow channel 62 and one or more surfaces of side channel 63. In certain examples, ledge 64 can be formed by an intersection between a cylindrical surface of flow channel 62 and a flat surface of side channel 63. The flat surface of side channel 63 abuts a corresponding flat surface of beam 65. In other examples, ledge 64 can be formed by an intersection between cylindrical surfaces of flow channel 62 and side channel 63, which may or may not abut similarly profiled surfaces of beam 65.

Beam 65 can be located within side channel 63. In this embodiment, beam 65 is disposed partially within side channel 63 and projects into flow channel 62 relative to centerline axis 59. More specifically, a majority of the beam 65 is located within the side channel 63 but a portion of the beam 65 extends beyond the side channel 63 into the flow channel 62 towards centerline axis 59. In other embodiments, a majority portion of beam 65 may extend into flow channel 62 towards or through centerline axis 59 from side channel 63. The beam 65 is located on the ledge 64. The beam 65 extends off of the ledge 64 into the flow channel 62. The beam 65 is held to the ledge 64 by fasteners 66. Beam 65 can be considered to be cantilevered from ledge 64 and into flow channel 62 in the example shown.

Sensor 67 can be mounted on the beam 65. Sensor 67 can be a strain gauge, amongst other options. Sensor 67 can measure movement of the beam 65. As shown, the sensor 67 is partially within the side channel 63 and partially within the flow channel 62, though it is understood that not all examples are so limited. The sensor 67 is positioned over the ledge 64. The wire 68 connects with the sensor 67 to carry one or more signals to and from the sensor 67. While one wire 68 is shown, more wires may be present. The wire 68 may carry power to the sensor 67 and carry a signal generated by the sensor 67 that indicates the degree of movement of the sensor 67, and thereby the movement of the beam 65. The sensor 67 outputs a signal proportional to the degree of bending or other type of strain of the beam 65.

The ledge 64 braces beam 65 when ledge 64 forms a downstream surface of side channel 63 relative to bead flow through flow channel 62. The beam 65 extends out beyond the ledge 64 so that the beam 65 is cantilevered into the flow channel 62. The beam 65 is cantilevered about the ledge 64 such that the beam 65 can pivot about the ledge 64 when a force acts on the portion of the beam 65 that is within the flow channel 62. Beam 65 may abut ledge 64 in an undeflected position in some examples (i.e., with zero bead flow). In the example shown, beam extends towards centerline axis 59 but does not intersect with centerline axis 59. As such, beam 65 projects less than halfway across flow channel 62, in the example shown. It is understood, however, that other configurations are possible. In other instances, beam65 can be spaced from ledge 64 such that a gap is formed between beam 65 and ledge 64 and beam 65 does not abut ledge 64 in an undeflected position (i.e., with zero bead flow).

In the first instance, in which beam 65 abuts ledge 64, ledge 64 braces beam 65 by resisting deflection of beam 65 in a direction of bead flow. In a second instance, such as when beam 65 is spaced from ledge 64, ledge 64 limits deflection of beam 65 in a direction of bead flow. Bracing beam 65 throughout a bead flow range permits bead flows to impose higher loads on beam 65 without excessive deflection of beam 65, protecting beam 65 as well as sensor 67 to a greater degree relative to an unbraced beam 65. Beam 65 could also be designed in such a way, via materials and dimensions, and per the maximum expected bead flow rates, that it will not be damaged due to excessive deflection, eliminating the need for ledge 64 to limit beam 65 deflection. Generally, air flowing through the flow channel 62 does not have enough mass to bend the beam 65 by impacting the portion of the beam 65 within the flow channel 62. However, the beads flowing within the flow channel 62 do have enough mass to bend the beam 65 about the ledge 64 when impacting the portion of the beam 65 within the flow channel 62. The beam 65 is resilient and will spring back rapidly when bent by impact from one or more beads, such that a sustained degree of bending indicates a steady volume of impact of beads on the beam 65.

In one manner of operation, the beads create drag on the portion of the beam 65 extending into the flow channel 62, causing a slight deflection and strain, and that strain value can then be correlated to a mass flow rate of beads. Air, having a lower viscosity, will have less of an effect on the strain value such as to be negligible, and because of the viscous boundary layer in the air near the surface of each bead, the air velocity would be nearly the same as the bead velocity.

The signal output by the sensor 67 can be correlated to a known volume of bead flow to establish a relationship between the signal output by the sensors 67 and bead flow volumes. It is noted that a bead flow volume can relate to weight per unit time or another metric of bead flow. The sensor 67 may be a resistor whose resistance increases as the resistor is strained (e.g., by narrowing and/or lengthening a resistor wire within the sensor 67 when strained). The change in resistance can be measured by a change in current flow through the resistor, and different amounts of change in current flow can be correlated to different known flow rates of beads. After calibration, the current or other metric of the signal output by the sensors 67 can be compared to establish relationship to correlate the measured signal to the known flow rate of beads. The flow rate of beads can then be output on the interface 16.

Around the side channel 63 is a mount 69. The mount 69 mounts on the housing 61. Attached to the mount 69 is a head 70. The mount 69 together with the head 70 seals off the side channel 63 (to prevent airflow through the side channel 63). The head 70 can include a port for routing the wire 68 out of the sensor module 58. The mount 69 can thread on and off the housing 61, or the mount 69 can be press fit, or fixed in another way. Removal of the mount 69 exposes side apertures 73 in the housing 61 which allow the fasteners 66 to be engaged/disengaged to secure/unsecure the beam 65 from the ledge 64.

In the example shown by FIG. 3, mount 69 includes major bore 76, minor bore 78, and intermediate bore 80 joining major bore 76 to minor bore 78 and forming a passage through mount 69 from side channel 63 to head 70. Major bore 76 includes internal threads 82 which engage corresponding external threads 84 of housing 61 disposed about side channel 63. Interior end face 86 forms a transition between major bore 76 and intermediate bore 80. Groove 88 protrudes into mount 69 from interior end face 86 and extends circumferentially about side channel 63 and intermediate bore 80. Groove 88 retains seal 90 which can be an o-ring, a gasket, or other sealing element. Exterior surface 92 of mount 69 can be adapted to receive a tool for securing mount 69 to housing 61. For example, exterior surface 92 can include at least a pair of parallel flat surfaces. In other examples, exterior surface 92 may define a hexagonal cross-section of mount 69. Securing mount 69 to housing 61 compresses seal 90 between mount 69 and housing 61 to seal compressed air within side channel 63.

Continuing with the example shown by FIG. 3, head 70 includes cavity 93 and port 94. Cavity 93 extends into but not through head 70 to enclose bores 76, 78, and 80 of mount 69 and side channel 63 of housing 61. Port 94 extends through a peripheral wall of head 70 to providing a route for wire 68. A peripheral dimension of cavity 93 can overlap or circumscribe minor bore 78 of mount 69. One or more head seals 96 are received between head 70 and mount 69 to prevent or reduce compressed air leakage between head 70 and mount 69. Wire 68 can be routed from sensor 67 through side passage 63 of housing 61; major bore 76, intermediate bore 80, and minor bore 78 of mount 69; and cavity 93 and port 94 of head 70. Head 70 can be secured to mount 61 via one or more fasteners 100, which extend through an exterior end face of head 70 into mount 69. The combination of mount 69 and head 70 as depicted in FIG. 3 permits mount 69 to thread onto housing 69 without twisting or coiling wire 68 within side passage 63.

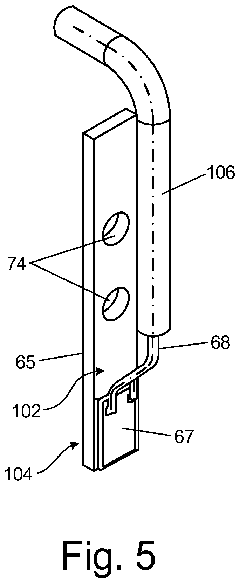

FIG. 5 shows an isometric isolated view of the beam 65. FIG. 5 shows apertures 74 through the beam 65 through which the fasteners 66 can pass to mount the beam 65 to the housing 61. In the depicted example, beam 65 has a rectangular cross-section. Major surfaces 102 and 104 of beam 65 provide flat regions for mounting sensor 67 and for engaging ledge 64. Wires 68 extend from sensor 67 along beam 65 and may be enclosed with protective cover 106, which can provide environmental and electrical protection.

A control circuit (e.g., as part of interface 16, such as a processor that executes a program stored in memory) may receive a plurality of outputs from a plurality of sensors 67 from a plurality of sensor modules 58 that monitor a plurality of bead flow lines supplying a plurality of bead dispensers 49. The control circuit can correlate the plurality of signals to a plurality of bead flow values and display the values on a screen of interface 16 and/or save the values to memory. This can be used to ensure balance in bead dispense, and allow adjustment if one bead line is supplying more than another. The control circuit can aggregate the values to calculate a total flow rate, representing the total or average outflow of beads from the bead hopper 19 and/or dispensed on the ground surface.

The beam 65 may be formed from a resilient material. For example, the beam 65 may be formed from metal. The beam 65 may be formed from polymer. The sensor 67 may be adhered to the beam 65 with adhesive (e.g., epoxy) and/or laminated onto the beam 65 under a coating.

The bead hopper 19 may be the only source of beads for the bead dispensers 49. The compressor 18 may be the only source of the flow of compressed air.

### Discussion of Non-Exclusive Examples

The following are non-exclusive descriptions of possible embodiments of the present invention.

### Bead flow sensor module

A bead flow sensor module according to an exemplary embodiment of this disclosure, among other possible things includes a housing, a beam, and a sensor. The housing includes a flow channel. The beam extends into the flow channel. The sensor is configured to output a signal indicative of bead impact on the beam.

The bead flow sensor module of the preceding paragraph can optionally include, additionally and/or alternatively, any one or more of the following features, configurations and/or additional components.

A further embodiment of the foregoing bead flow sensor module, wherein the sensor can be mounted on the beam.

A further embodiment of any of the foregoing bead flow sensor modules, wherein the sensor can be located on the side of the beam that the beads impact.

A further embodiment of any of the foregoing bead flow sensor modules, wherein the sensor can be located on an upstream side of the beam relative to a flow of beads through the flow channel.

A further embodiment of any of the foregoing bead flow sensor modules, wherein the sensor can be at least partially located within the flow channel.

A further embodiment of any of the foregoing bead flow sensor modules, wherein the sensor can be located partially within the flow channel and partially outside of the flow channel.

A further embodiment of any of the foregoing bead flow sensor modules can include a side channel that branches from the flow channel.

A further embodiment of any of the foregoing bead flow sensor modules, wherein the beam can be partially located within the side channel.

A further embodiment of any of the foregoing bead flow sensor modules, wherein the beam can be supported by a ledge.

A further embodiment of any of the foregoing bead flow sensor modules, wherein the beam can extend off of the ledge into the flow channel.

A further embodiment of any of the foregoing bead flow sensor modules, wherein the sensor can overlap with the ledge

A further embodiment of any of the foregoing bead flow sensor modules can include one or more fasteners that secure the beam to the housing.

A further embodiment of any of the foregoing bead flow sensor modules, wherein the one or more fasteners can be threaded bolts.

A further embodiment of any of the foregoing bead flow sensor modules, wherein the housing can form a T shape.

A further embodiment of any of the foregoing bead flow sensor modules, wherein the side channel can intersect the flow channel at an oblique angle such that the housing forms a Y shape.

A further embodiment of any of the foregoing bead flow sensor modules, wherein the beam can extend from the housing into the flow channel.

A further embodiment of any of the foregoing bead flow sensor modules, wherein the ledge can be formed at the intersection of the side channel and the flow channel.

A further embodiment of any of the foregoing bead flow sensor modules, wherein the ledge can abut the beam between a distal end within the flow channel and a proximal end secured to the housing within the side channel.

A further embodiment of any of the foregoing bead flow sensor modules, wherein the side channel can include a dead-end opposite the flow channel.

A further embodiment of any of the foregoing bead flow sensor modules, wherein the housing can include one or more side apertures aligned with each of the one or more fasteners.

A further embodiment of any of the foregoing bead flow sensor modules can include a mount engaging the housing.

A further embodiment of any of the foregoing bead flow sensor modules, wherein the mount can include at least one bore extending through the mount.

A further embodiment of any of the foregoing bead flow sensor modules, wherein the mount can engage the housing at the at least one bore.

A further embodiment of any of the foregoing bead flow sensor modules can include a head attached to the mount.

A further embodiment of any of the foregoing bead flow sensor modules, wherein the mount and the head can enclose the side channel to form a dead-end.

### System incorporating a bead flow sensor module

A system according to an exemplary embodiment of this disclosure, among other possible things includes a source of a flow of compressed air, a bead hopper, a bead dispenser, a flow pathway between the bead hopper and the bead dispenser, and a bead flow sensor module. The bead hopper is supplied with the flow of compressed air, a flow of beads being carried with the flow of compressed air out of the bead hopper into the flow pathway. The bead flow sensor module is positioned along the flow pathway.

The system of the preceding paragraph can optionally include, additionally and/or alternatively, any one or more of the following features, configurations and/or additional components.

A further embodiment of the foregoing system, wherein the bead flow sensor module can include a housing with a flow channel, a beam that extends into the flow channel, and a sensor configured to output a signal indicative of bead impact on the beam.

A further embodiment of any of the foregoing systems, wherein the sensor can be mounted on the beam.

A further embodiment of any of the foregoing systems, wherein the sensor can be located on the side of the beam that the beads impact.

A further embodiment of any of the foregoing systems, wherein the sensor can be located on an upstream side of the beam relative to a flow of beads through the flow channel.

A further embodiment of any of the foregoing systems, wherein the sensor can be at least partially located within the flow channel.

A further embodiment of any of the foregoing systems, wherein the sensor can be located partially within the flow channel and partially outside of the flow channel.

A further embodiment of any of the foregoing systems can include a side channel that branches from the flow channel.

A further embodiment of any of the foregoing systems, wherein the beam can be partially located within the side channel.

A further embodiment of any of the foregoing systems, wherein the beam can be supported by a ledge.

A further embodiment of any of the foregoing systems, wherein the beam can extend off of the ledge into the flow channel.

A further embodiment of any of the foregoing systems, wherein the sensor can overlap with the ledge.

A further embodiment of any of the foregoing systems can include one or more fasteners that secure the beam to the housing.

A further embodiment of any of the foregoing systems, wherein the one or more fasteners can be threaded bolts.

A further embodiment of any of the foregoing systems, wherein the housing can form a T shape.

A further embodiment of any of the foregoing systems, wherein the side channel can intersect the flow channel at an oblique angle such that the housing forms a Y shape.

A further embodiment of any of the foregoing systems, wherein the beam can extend from the housing into the flow channel.

A further embodiment of any of the foregoing systems, wherein the ledge can be formed at the intersection of the side channel and the flow channel.

A further embodiment of any of the foregoing systems, wherein the ledge can abut the beam between a distal end within the flow channel and a proximal end secured to the housing within the side channel.

A further embodiment of any of the foregoing systems, wherein the side channel can include a dead-end opposite the flow channel.

A further embodiment of any of the foregoing systems, wherein the housing can include one or more side apertures aligned with each of the one or more fasteners.

A further embodiment of any of the foregoing systems, wherein the bead flow sensor module can include a mount engaging the housing.

A further embodiment of any of the foregoing systems, wherein the mount can include at least one bore extending through the mount.

A further embodiment of any of the foregoing systems, wherein the mount can engage the housing at the at least one bore.

A further embodiment of any of the foregoing systems, wherein the bead flow sensor module can include a head attached to the mount.

A further embodiment of any of the foregoing systems, wherein the mount and the head can enclose the side channel to form a dead-end.

A further embodiment of any of the foregoing systems, wherein the bead flow sensor module can be closer to the bead dispenser than the bead hopper along the flow pathway.

A further embodiment of any of the foregoing systems, wherein the bead flow sensor module can be adjacent to the bead dispenser.

A further embodiment of any of the foregoing systems can further include a plurality of bead dispensers.

A further embodiment of any of the foregoing systems can further include a plurality of flow pathways.

A further embodiment of any of the foregoing systems, wherein each flow pathway of the plurality of flow pathways can extend between the bead dispenser and one of the plurality of bead dispensers.

A further embodiment of any of the foregoing systems can further include a plurality of bead flow sensor modules.

A further embodiment of any of the foregoing systems, wherein each bead flow sensor module of the plurality of bead flow sensor modules is positioned along one of the plurality of flow pathways.

A further embodiment of any of the foregoing systems, wherein at least one bead flow sensor module of the plurality of bead flow sensor modules can be closer to the bead dispenser than the bead hopper along one of the plurality of flow pathways.

A further embodiment of any of the foregoing systems, wherein each bead flow sensor module of the plurality of bead flow sensor modules can be closer to the bead dispenser than the bead hopper along one of the plurality of flow pathways.

A further embodiment of any of the foregoing systems, wherein at least one bead flow sensor module of the plurality of bead flow sensor modules can be adjacent to the bead dispenser along one of the plurality of flow pathways.

A further embodiment of any of the foregoing systems, wherein each bead flow sensor module of the plurality of bead flow sensor modules can be adjacent to the bead dispenser along one of the plurality of flow pathways.

### Ground stripe marking system

A ground stripe marking system according to an exemplary embodiment of this disclosure, among other possible things includes a liquid reservoir, a spray outlet, a pump, a compressor, a bead hopper, a bead dispenser, and a bead flow sensor module. The pump is fluidly connected to the liquid reservoir to draw marking material from the liquid reservoir and discharge marking material through the spray outlet. The compressor provides a flow of compressed air. The bead hopper is supplied with the flow of compressed air, and the compressed air is configured to carry a flow of beads out of the bead hopper. The bead dispenser is connected to the bead hopper by a flow pathway between the bead hopper and the bead dispenser. The bead flow sensor module includes a sensor configured to output a signal indicative of bead flow through the bead flow sensor module.

The ground stripe marking system of the preceding paragraph can optionally include, additionally and/or alternatively, any one or more of the following features, configurations and/or additional components.

A further embodiment of the foregoing ground stripe marking system, wherein the bead flow sensor module can include a housing that includes a flow channel.

A further embodiment of the foregoing ground stripe marking systems, wherein the bead flow sensor module can include a beam that extends into the flow channel.

A further embodiment of the foregoing ground stripe marking systems, wherein the sensor can be configured to output a signal indicative of bead impact on the beam.

A further embodiment of the foregoing ground stripe marking systems, wherein the sensor can be mounted on the beam.

A further embodiment of any of the foregoing ground stripe marking systems, wherein the sensor can be located on the side of the beam that the beads impact.

A further embodiment of any of the foregoing ground stripe marking systems, wherein the sensor can be located on an upstream side of the beam relative to a flow of beads through the flow channel.

A further embodiment of any of the foregoing ground stripe marking systems, wherein the sensor can be at least partially located within the flow channel.

A further embodiment of any of the foregoing ground stripe marking systems, wherein the sensor can be located partially within the flow channel and partially outside of the flow channel.

A further embodiment of any of the foregoing ground stripe marking systems can include a side channel that branches from the flow channel.

A further embodiment of any of the foregoing ground stripe marking systems, wherein the beam can be partially located within the side channel.

A further embodiment of any of the foregoing ground stripe marking systems, wherein the beam can be supported by a ledge.

A further embodiment of any of the foregoing ground stripe marking systems, wherein the beam can extend off of the ledge into the flow channel.

A further embodiment of any of the foregoing ground stripe marking systems, wherein the sensor can overlap with the ledge

A further embodiment of any of the foregoing ground stripe marking systems can include one or more fasteners that secure the beam to the housing.

A further embodiment of any of the foregoing ground stripe marking systems, wherein the one or more fasteners can be threaded bolts.

A further embodiment of any of the foregoing ground stripe marking systems, wherein the housing can form a T shape.

A further embodiment of any of the foregoing ground stripe marking systems, wherein the side channel can intersect the flow channel at an oblique angle such that the housing forms a Y shape.

A further embodiment of any of the foregoing ground stripe marking systems, wherein the beam can extend from the housing into the flow channel.

A further embodiment of any of the foregoing ground stripe marking systems, wherein the ledge can be formed at the intersection of the side channel and the flow channel.

A further embodiment of any of the foregoing ground stripe marking systems, wherein the ledge can abut the beam between a distal end within the flow channel and a proximal end secured to the housing within the side channel.

A further embodiment of any of the foregoing ground stripe marking systems, wherein the side channel can include a dead-end opposite the flow channel.

A further embodiment of any of the foregoing ground stripe marking systems, wherein the housing can include one or more side apertures aligned with each of the one or more fasteners.

A further embodiment of any of the foregoing ground stripe marking systems can include a mount engaging the housing.

A further embodiment of any of the foregoing ground stripe marking systems, wherein the mount can include at least one bore extending through the mount.

A further embodiment of any of the foregoing ground stripe marking systems, wherein the mount can engage the housing at the at least one bore.

A further embodiment of any of the foregoing ground stripe marking systems can include a head attached to the mount.

A further embodiment of any of the foregoing ground stripe marking systems, wherein the mount and the head can enclose the side channel to form a dead-end.

A further embodiment of any of the foregoing ground stripe marking systems, wherein the bead flow sensor module can be closer to the bead dispenser than the bead hopper along the flow pathway.

A further embodiment of any of the foregoing ground stripe marking systems, wherein the bead flow sensor module can be adjacent to the bead dispenser.

A further embodiment of any of the foregoing ground stripe marking systems can further include a plurality of bead dispensers.

A further embodiment of any of the foregoing ground stripe marking systems can further include a plurality of flow pathways.

A further embodiment of any of the foregoing ground stripe marking systems, wherein each flow pathway of the plurality of flow pathways can extend between the bead dispenser and one of the plurality of bead dispensers.

A further embodiment of any of the foregoing ground stripe marking systems can further include a plurality of bead flow sensor modules.

A further embodiment of any of the foregoing ground stripe marking systems, wherein each bead flow sensor module of the plurality of bead flow sensor modules is positioned along one of the plurality of flow pathways.

A further embodiment of any of the foregoing ground stripe marking systems, wherein at least one bead flow sensor module of the plurality of bead flow sensor modules can be closer to the bead dispenser than the bead hopper along one of the plurality of flow pathways.

A further embodiment of any of the foregoing ground stripe marking systems, wherein each bead flow sensor module of the plurality of bead flow sensor modules can be closer to the bead dispenser than the bead hopper along one of the plurality of flow pathways.

A further embodiment of any of the foregoing ground stripe marking systems, wherein at least one bead flow sensor module of the plurality of bead flow sensor modules can be adjacent to the bead dispenser along one of the plurality of flow pathways.

A further embodiment of any of the foregoing ground stripe marking systems, wherein each bead flow sensor module of the plurality of bead flow sensor modules can be adjacent to the bead dispenser along one of the plurality of flow pathways.

In the following, some aspects of the present disclosure are summarized:

### Aspect 1:

A bead flow sensor module, comprising:
   - a housing having a flow channel;
   - a beam that extends into the flow channel; and
   - a sensor that outputs a signal indicative of bead impact on the beam.

### Aspect 2:

The bead flow sensor module of Aspect 1, wherein the sensor is mounted on the beam.

### Aspect 3:

The bead flow sensor module of Aspect 2, wherein the sensor is located on an upstream side of the beam relative to a flow of beads through the flow channel.

### Aspect 4:

The bead flow sensor module of Aspect 1, wherein the sensor is at least partially located within the flow channel.

### Aspect 5:

The bead flow sensor module of Aspect 1, wherein the sensor is located partially within the flow channel and partially outside of the flow channel.

### Aspect 6:

The bead flow sensor module of Aspect 1, further comprising a side channel that branches from the flow channel, wherein the beam is partially located within the side channel.

### Aspect 7:

The bead flow sensor module of Aspect 1, wherein the beam is supported by a ledge and the beam extends off of the ledge into the flow channel.

### Aspect 8:

The bead flow sensor module of Aspect 7, wherein the sensor overlaps with the ledge.

### Aspect 9:

The bead flow sensor module of Aspect 1, further comprising one or more fasteners that secure the beam to the housing.

### Aspect 10:

The bead flow sensor module of Aspect 9, wherein the one or more fasteners are threaded bolts.

### Aspect 11:

The bead flow sensor module of Aspect 1, wherein the housing forms a T shape.

### Aspect 12:

A system comprising:
- a source of a flow of compressed air;
- a bead hopper that is supplied with the flow of compressed air, the bead hopper storing a supply of beads configured to form a flow of beads carried by the flow of compressed air out of the bead hopper;
- a bead dispenser;
- a flow pathway between the bead hopper and the bead dispenser; and
- the bead flow sensor module of Aspect 1, wherein the bead flow sensor module is positioned along the flow pathway.

### Aspect 13:

The system of Aspect 12, wherein the bead flow sensor module is closer to the bead dispenser than the bead hopper along the flow pathway.

### Aspect 14:

The system of Aspect 13, wherein the bead flow sensor module is adjacent to the bead dispenser.

### Aspect 15:

A system comprising:
- a source of a flow of compressed air;
- a bead hopper that is supplied with the flow of compressed air, the bead hopper storing a supply of beads configured to form a flow of beads carried by the flow of compressed air out of the bead hopper;
- a plurality of bead dispensers;
- a plurality of flow pathways, each flow pathway of the plurality of flow pathways extends between the bead hopper and one of the plurality of bead dispensers; and
- a plurality of bead flow sensor modules of Aspect 1, wherein each bead flow sensor module of the plurality of bead flow sensor modules is positioned along one of the plurality of flow pathways.

### Aspect 16:

A bead flow sensor module, comprising:
- a housing having a flow channel;
- a beam supported by the housing that extends from the housing into the flow channel; and
- a sensor that outputs a signal indicative of bead impact on the beam.

### Aspect 17:

The bead flow sensor module of Aspect 16, wherein the sensor is mounted on the beam.

### Aspect 18:

The bead flow sensor module of Aspect 17, wherein the sensor is located on an upstream side of the beam relative to a flow direction of beads through the flow channel.

### Aspect 19:

The bead flow sensor module of Aspect 16, further comprising a side channel that branches from the flow channel, wherein the beam is partially located within the side channel.

### Aspect 20:

The bead flow sensor module of Aspect 19, wherein the side channel includes a dead-end opposite the flow channel.

### Aspect 21:

The bead flow sensor module of Aspect 19, further comprising a ledge formed at the intersection of the side channel and the flow channel, wherein the ledge abuts the beam between a distal end within the flow channel and a proximal end secured to the housing within the side channel.

### Aspect 22:

The bead flow sensor module of Aspect 21, wherein the sensor overlaps with the ledge.

### Aspect 23:

The bead flow sensor module of Aspect 19, further comprising a ledge formed at the intersection of the side channel and the flow channel, wherein the beam is spaced from the ledge and the ledge limits deflection of the beam.

### Aspect 24:

The bead flow sensor module of Aspect 17, further comprising one or more fasteners that secure the beam to the housing.

### Aspect 25:

The bead flow sensor module of Aspect 24, wherein the housing further includes one or more side apertures aligned with each of the one or more fasteners.

### Aspect 26:

The bead flow sensor module of Aspect 24, further comprising:
- a mount including at least one bore extending through the mount, the mount engaging the housing at the at least one bore; and
- a head attached to the mount, wherein the mount and the head enclose the side channel to form a dead-end.

### Aspect 27:

A system comprising:
- a source of a flow of compressed air;
- a bead hopper that is supplied with the flow of compressed air, a flow of beads being carried with the flow of compressed air out of the bead hopper;
- a bead dispenser;
- a flow pathway between the bead hopper and the bead dispenser; and
- the bead flow sensor module of Aspect 16, wherein the bead flow sensor module is positioned along the flow pathway.

### Aspect 28:

The system of Aspect 27, wherein the bead flow sensor module is closer to the bead dispenser than the bead hopper along the flow pathway.

### Aspect 29:

The system of Aspect 28, wherein the bead flow sensor module is adjacent to the bead dispenser.

### Aspect 30:

A system comprising:
- a source of a flow of compressed air;
- a bead hopper that is supplied with the flow of compressed air, a flow of beads being carried with the flow of compressed air out of the bead hopper;
- a plurality of bead dispensers;
- a plurality of flow pathways, each flow pathway of the plurality of flow pathways extends between the bead hopper and one of the plurality of bead dispensers; and
- a plurality of bead flow sensor modules of Aspect 16, wherein each bead flow sensor module of the plurality of bead flow sensor modules is positioned along one of the plurality of flow pathways.

### Aspect 31:

A ground stripe marking system comprising:
- a liquid reservoir;
- a spray outlet;
- a pump fluidly connected to liquid reservoir to draw marking material from the liquid reservoir and discharge marking material through the spray outlet;
- a compressor providing a flow of compressed air;
- a bead hopper that is supplied with the flow of compressed air, the compressed air configured to carry a flow of beads out of the bead hopper;
- a bead dispenser connected to the bead hopper by a flow pathway between the bead hopper and the bead dispenser; and
- a bead flow sensor module positioned along the flow pathway, the bead flow sensor module comprising:
- a sensor that outputs a signal indicative of bead flow through the bead flow sensor module.

### Aspect 32:

The ground stripe marking system of Aspect 31, wherein the bead flow sensor module comprises:
- a housing having a flow channel fluidly connected to the flow pathway; and
- a beam supported by the housing that extends from the housing into the flow channel, wherein the signal is indicative of bead impact on the beam.

### Aspect 33:

The ground stripe marking system of Aspect 31, wherein the liquid reservoir, the pump, and the compressor are supported by to a vehicle surface.

### Aspect 34:

The ground stripe marking system of Aspect 33, wherein the spray outlet is positioned in front of the bead dispenser such that the bead dispenser is configured to pass over marking material sprayed from the spray outlet.

### Aspect 35:

The ground stripe marking system of Aspect 31, further comprising a hose fluidly connecting the bead hopper and the bead dispenser to form the flow pathway.

### Aspect 36:

The ground stripe marking system of claims 32, wherein the bead flow sensor module is closer to the bead dispenser than the bead hopper along the flow pathway.

### Aspect 37:

The ground stripe marking system of Aspect 36, wherein the bead flow sensor module is adjacent to the bead dispenser.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A bead flow sensor module, comprising:
- a housing having a flow channel;
- a side channel that branches from the flow channel;
- a beam that is partially located within the side channel, wherein the beam is supported by the housing and extends from the housing into the flow channel; and
- a sensor is mounted on the beam and outputs a signal indicative of bead impact on the beam;
wherein the sensor is preferably located on an upstream side of the beam relative to a flow of beads through the flow channel; or
wherein the sensor is at least partially located within the flow channel; or
wherein the sensor is located partially within the flow channel and partially outside of the flow channel.

2. The bead flow sensor module of claim 1,
wherein the side channel includes a dead-end opposite the flow channel.

3. The bead flow sensor module of one of claims 1 or 2,
further comprising one or more fasteners that secure the beam to the housing, wherein the one or more fasteners are preferably threaded bolts,
and/or wherein the housing preferably further includes one or more side apertures aligned with each of the one or more fasteners.

4. The bead flow sensor module of one of claims 1 to 3,
wherein the housing forms a T shape.

5. The bead flow sensor module of claims 1 to 4,
wherein a majority of the beam is located within the side channel while a portion of the beam extends beyond the side channel into the flow channel.

6. The bead flow sensor module of one of claim 1 to 5,
wherein the beam projects less than halfway across the flow channel.

7. The bead flow sensor module of one of claims 1 to 7,
wherein the beam is spaced from an intersection of the flow channel and
the side channel to form a gap in an undeflected position of the beam.

8. The bead flow sensor module of one of claims 1 to 7,
wherein the sensor outputs a signal proportional to the degree of bending of the beam.

9. The bead flow sensor module of any one of claims 1 to 8, further comprising:
- a mount including at least one bore extending through the mount, the mount removably engaging the housing at the at least one bore; and
- a head attached to the mount, wherein the mount and the head enclose the side channel to form a dead-end.

10. The bead flow sensor module of any of claims 3 to 7, further comprising:
- a mount including at least one bore extending through the mount, the mount removably engaging the housing at the at least one bore, wherein the mount overlaps the side apertures of the housing; and
- a head attached to the mount, wherein the mount and the head enclose the side channel to form a dead-end.

11. A system comprising:
- a source of a flow of compressed air;
- a bead hopper that is supplied with the flow of compressed air, the bead hopper storing a supply of beads configured to form a flow of beads carried by the flow of compressed air out of the bead hopper;
- a bead dispenser;
- a flow pathway between the bead hopper and the bead dispenser; and
- the bead flow sensor module of one of claims 1 to 10, wherein the bead flow sensor module is positioned along the flow pathway,
wherein the bead flow sensor module is preferably closer to the bead dispenser than the bead hopper along the flow pathway, and/or wherein the bead flow sensor module is preferably adjacent to the bead dispenser.

12. The system of claim 11, comprising:
- a plurality of bead dispensers;
- a plurality of flow pathways, each flow pathway of the plurality of flow pathways extends between the bead hopper and one of the plurality of bead dispensers; and
- a plurality of bead flow sensor modules of one of claims 1 to 10,
wherein each bead flow sensor module of the plurality of bead flow sensor modules is positioned along one of the plurality of flow pathways.

13. A ground stripe marking system comprising:
- a liquid reservoir;
- a spray outlet;
- a pump fluidly connected to liquid reservoir to draw marking material from the liquid reservoir and discharge marking material through the spray outlet;
- a compressor providing a flow of compressed air;
- a bead hopper that is supplied with the flow of compressed air, the compressed air configured to carry a flow of beads out of the bead hopper;
- a bead dispenser connected to the bead hopper by a flow pathway between the bead hopper and the bead dispenser; and
- a bead flow sensor module positioned along the flow pathway, the bead flow sensor module being a bead flow sensor module of one of claims 1 to 10 and comprising:
- a sensor that outputs a signal indicative of bead flow through the bead flow sensor module.

14. The system of claim 13, comprising:
- a plurality of bead dispensers;
- a plurality of flow pathways, each flow pathway of the plurality of flow pathways extends between the bead hopper and one of the plurality of bead dispensers; and
- a plurality of bead flow sensor modules of one of claims 1 to 10,
wherein each bead flow sensor module of the plurality of bead flow sensor modules is positioned along one of the plurality of flow pathways.

15. The ground stripe marking system of claim 13 or 14,
wherein the liquid reservoir, the pump, and the compressor are supported by to a vehicle surface, wherein the spray outlet is preferably positioned in front of the bead dispenser such that the bead dispenser is configured to pass over marking material sprayed from the spray outlet; and/or
further comprising a hose fluidly connecting the bead hopper and the bead dispenser to form the flow pathway; and/or
wherein the bead flow sensor module is closer to the bead dispenser than the bead hopper along the flow pathway, wherein the bead flow sensor module is preferably adjacent to the bead dispenser.
